# EUROPÄISCHE PATENTSCHRIFT

(11) **EP 0 789 822 B1**
(45) Veröffentlichungstag und Bekanntmachung des Hinweises auf die Patenterteilung: **18.02.1998**
(21) Anmeldenummer: 96926966.1
(22) Anmeldetag: 16.08.1996
(51) Int. Cl.: F16K 17/16

(54) **VERFAHREN UND VORRICHTUNG ZUM TRANSPORTIEREN EINER THERMISCH INSTABILEN, VISKOSEN MASSE**
PROCESS AND DEVICE FOR TRANSPORTING A THERMALLY UNSTABLE VISCOUS MASS
PROCEDE ET DISPOSITIF DE TRANSPORT D'UNE MASSE VISQUEUSE THERMIQUEMENT INSTABILE

(30) Priorität: 31.08.1995 AT 1462/95
(43) Veröffentlichungstag der Anmeldung: 20.08.1997
(73) Patentinhaber: LENZING AKTIENGESELLSCHAFT, 4860 Lenzing (AT)
(72) Erfinder: ZIKELI, Stefan, A-4844 Regau (AT); WEIDINGER, Klaus, A-4860 Lenzing (AT); ECKER, Friedrich, A-4850 Timelkam (AT); LONGIN, Michael, A-4860 Lenzing (AT)
(74) Vertreter: Schwarz, Albin, Dr. Kopecky & Schwarz Patentanwälte
(86) Internationale Anmeldenummer: AT9600152
(87) Internationale Veröffentlichungsnummer: WO9708482

(56) Entgegenhaltungen:
- US-A- 4 403 626
- US-A- 5 337 776

## Beschreibung

Die Erfindung betrifft ein Verfahren zum Transportieren einer thermisch instabilen, viskosen Masse durch eine Rohrleitung, die eine Sollbruchstelle zum Ablassen von Überdruck aufweist, welche Sollbruchstelle bei Erreichen des Überdruckes bricht, wodurch der Überdruck abgelassen wird. Die Erfindung betrifft ferner eine Vorrichtung zur Durchführung des Verfahrens.

Für die Zwecke der vorliegenden Beschreibung und der vorliegenden Patentansprüche wird die Bezeichnung viskose Masse insbesondere für eine Lösung verwendet, welche Cellulose und ein wässeriges tertiäres Aminoxid enthält, und welche zu cellulosischen Formkörper jeglicher Art, insbesondere Fasern und Folien, verarbeitet werden kann.

Tertiäre Aminoxide sind als alternative Lösungsmittel für Cellulose bekannt. Aus der US-PS 2,179,181 ist beispielsweise bekannt, daß tertiäre Aminoxide Cellulose ohne Derivatisierung zu lösen vermögen und daß aus diesen Lösungen durch Fällung cellulosische Formkörper, wie Fasern, gewonnen werden können. Aus der EP-A - 0 553 070 der Anmelderin sind weitere tertiäre Aminoxide bekannt. Alle tertiären Aminoxide, die Cellulose zu lösen vermögen, sind gemeint, wenn nachfolgend der Einfachheit halber lediglich NMMO (= N-Methylmorpholin-N-oxid) angesprochen wird.

Tertiäre Aminoxide bieten als alternative Lösungsmittel insofern einen Vorteil, als die Cellulose im Gegensatz zum Viskoseverfahren vom NMMO nicht-derivatisierend gelöst wird, wodurch die Cellulose nicht chemisch regeneriert werden muß, das NMMO chemisch unverändert bleibt und beim Fällen in das Fällbad übergeht, aus diesem rückgewonnen und für eine erneute Lösungsbereitung wiederverwendet werden kann. Das NMMO-Verfahren eröffnet somit die Möglichkeit eines geschlossenen Lösungsmittelkreislaufes. Dazu kommt noch, daß NMMO eine äußerst geringe Toxizität aufweist.

Beim Auflösen von Cellulose in NMMO nimmt jedoch der Polymersationsgrad der Cellulose ab. Zusätzlich führt insbesondere die Anwesenheit von Metallionen (z.B. Fe³⁺) zu radikalisch initiierten Kettenspaltungen und damit zu einem deutlichen Abbau der Cellulose und des Lösungsmittels (Buijtenhuijs et al. (The Degradation and Stabilization of Cellulose Dissolved in N-Methylmorpholin-N-Oxide (NMM), in "Das Papier", 40. Jahrgang, Heft 12, Seiten 615-619, 1986).

Auch Aminoxide weisen allgemein nur eine begrenzte Thermostabilität auf, die in Abhängigkeit von der Struktur variiert. Das Monohydrat von NMMO liegt unter Normalbedingungen als weißer kristalliner Feststoff vor, der bei 72°C schmilzt. Die Anhydroverbindung schmilzt hingegen erst bei 172°C. Beim Erhitzen des Monohydrates tritt ab 120/130°C eine starke Verfärbung auf. Ab 175°C wird eine exotherme Reaktion unter vollständiger Entwässerung der Schmelze und heftiger Gasentwicklung mit explosionshaftem Verlauf ausgelöst, wobei Temperaturen über 250°C erreicht werden.

Es ist bekannt, daß metallisches Eisen und Kupfer, sowie insbesondere deren Salze, die Zersetzungstemperaturen von NMMO beträchtlich herabsetzen, wobei gleichzeitig die jeweilige Zersetzungsgeschwindigkeit erhöht wird.

Im übrigen tritt zu den oben genannten Problemen noch ein weiteres: die thermische Instabilität der NMMO-Cellulose--Lösungen selbst. Darunter ist zu verstehen, daß in den Lösungen bei den erhöhten Temperatur der Verarbeitung (etwa 110-120°C) unkontrollierbare Zersetzungsprozesse ausgelöst werden, die unter Entwicklung von Gasen zu heftigen Verpuffungen, Bränden und sogar zu Explosionen führen können.

Um den bei den oben genannten Zersetzungsprozessen entstehenden Überdruck in Rohrleitungen abzulassen, ist aus der US-A - 5,337,776 ein Rohrleitungsteil bekannt, der als Teil der Rohrwandung eine Sollbruchstelle aufweist. Diese Sollbruchstelle ist als Berstscheibe ausgeführt. Durch diesen Einbau der Berstscheibe in die Rohrwand kommt es jedoch zu einer Unterbrechung des Heizungsmantels des Rohrs und damit zu einem Aushärten von transportierter Masse an der nicht beheizten Berstscheibenoberfläche, sofern der Erstarrungspunkt der transportierten Masse unterschritten wird. Diese erstarrte Masse haftet nicht zuletzt auch wegen der geringen Wandgeschwindigkeit an der Berstscheibe und wird nicht mittransportiert. Dadurch wird nicht nur die Funktion der Berstscheibe, das heißt ihr zeitgerechtes Ansprechen, beeinträchtigt, es kommt auch zu einer Verunreinigung von transportierter Masse, sofern in jener Masse, die an der Berstscheibe abgelagert ist, Zersetzungsprodukte gebildet werden. Dies kann beispielsweise bei Lösungen von Cellulose in tertiären Aminoxiden der Fall sein.

Außerdem muß beim Einbau von Berstscheiben in einer Rohrleitungswand auf den erforderlichen Entlastungsquerschnitt, welcher der Fachmann aus der maximal sich ergebenden Druckanstiegsrate des Massesystems berechnen kann, dimensioniert werden. Dies führt wiederum dazu, daß entsprechend dem Rohrleitungsvolumen angepaßte Berstscheibenquerschnitte gewählt und eingebaut werden müssen. Dagegen wäre es aber von Vorteil, so kleine Berstscheiben wie nur möglich einzusetzen, da der dadurch in Anspruch genommene Rohrleitungsumfang gering ist und sich die Krümmung des Berstscheibendurchmessers gut der Krümmung der Rohrwand anpaßt.

Es ist somit ein Optimum zu suchen, bei welchem die Fließgeschwindigkeit im Inneren des Rohres über den Rohrleitungsinnendurchmesser entsprechend dem hochviskosen Fließverhalten angepaßt wird. Dadurch wird erreicht, daß bei hohen Viskositäten der Masse geringe Schergeschwindigkeiten im Rohr vorherrschen, was gleichbedeutend mit einem entsprechend großen Rohrleitungsinnendurchmesser ist. Wird nun eine derartige Rohrleitung gemäß dem aus der US-A-5,337,776 bekannten Methode mit einer bündig zur Rohrinnenwand angebrachten Berstscheibe abgesichert, so beansprucht dies einen unnötig großen Umfangsbereich des Rohres für die Berstscheibenhalterung, was zu den oben beschriebenen Problemen führt.

Gemäß der US-A - 5,337,776 wird die Berstscheibe an das Rohr angepaßt. Dies ist jedoch entsprechend der maximalen Druckgenerierungsrate des instabilen Massesystems nicht notwendig. Das heißt, daß eine querschnittsoptimierte Berstscheibe zum Einsatz kommen sollte.

Ist aufgrund einer höheren Entlastung ein größerer Berstscheibenquerschnitt nötig, ergibt sich eine schlechtere Anpassung, da der von der Berstscheibe in Anspruch genommene Rohrleitungsumfang groß ist, wodurch das Fließverhalten in der Rohrleitung gestört werden kann.

Hier setzt nun die vorliegende Erfindung an und setzt sich zum Ziel, ein Verfahren zum Transportieren thermisch instabiler, viskoser Massen, insbesondere ein Verfahren zum Transportieren einer Form- bzw. Spinnmasse, die Cellulose und ein wässeriges tertiäres Aminoxid enthält, zur Verfügung zu stellen, das die oben genannten Probleme nicht aufweist.

Die obengenannte US-A-5337776 veröffentlicht ein Verfahren gemäß dem Obergriff des 1. Anspruchs, und eine Vorrichtung zur Durchführen dieses Verfahrens.

Das erfindungsgemäße Verfahren zum Transportieren einer thermisch instabilen, viskosen Masse durch eine Rohrleitung, die eine Sollbruchstelle zum Ablassen von Überdruck aufweist, welche Sollbruchstelle bei Erreichen des Überdruckes bricht, wodurch der Überdruck abgelassen wird, ist dadurch gekennzeichnet, daß die Sollbruchstelle im Inneren der Rohrleitung vorgesehen ist, mit der Maßgabe, daß die Sollbruchstelle nicht als Teil der Innenwand der Rohrleitung vorgesehen ist.

Es hat sich gezeigt, daß durch die erfindungsgemäße Anordnung der Sollbruchstelle im Inneren der Rohrleitung nicht nur eine effiziente Ableitung eines Überdrucks gewährleistet ist, sondern daß auch die durch den Einbau der querschnittsoptimierten Sollbruchstelle in der Rohrleitung hervorgerufene Unterbrechung des Heizmantels so gering gehalten werden kann, daß eine Beeinträchtigung des Transportes der viskosen Masse nicht gegeben ist.

Weiters ist gewährleistet, daß sich die Sollbruchstelle in der gut temperierten Masse befindet.

Eine bevorzugte Ausführungsform des erfindungsgemäßen Verfahrens besteht darin, daß die Sollbruchstelle in der Rohrleitung im wesentlichen mittig angeordnet ist, wobei es sich herausgestellt hat, daß die Sollbruchstelle am besten so angeordnet ist, daß sie der Transportrichtung der Masse im wesentlichen abgewandt ist.

Die erfindungsgemäß vorgesehe Sollbruchstelle ist zweckmäßigerweise als Berstscheibe ausgeführt.

Das erfindungsgemäße Verfahren eignet sich insbesondere zum Transport einer hochviskosen Lösung von Cellulose in einem wäßrigen, tertiären Aminoxid.

Die Erfindung betrifft ferner eine Vorrichtung zur Durchführung des erfindungsgemäßen Verfahrens, welche Vorrichtung eine Rohrleitung und eine Berstscheibe umfaßt und dadurch gekennzeichnet ist, daß die Berstscheibe im Inneren der Rohrleitung vorgesehen ist, mit der Maßgabe, daß die Berstscheibe nicht als Teil der Innenwand der Rohrleitung vorgesehen ist.

In einer bevorzugten Ausgestaltung der erfindungsgemäßen Vorrichtung ist die Berstscheibe in der Rohrleitung im wesentlichen mittig angeordnet, wobei sie am besten der Transportrichtung der Masse im wesentlichen abgewandt ist.

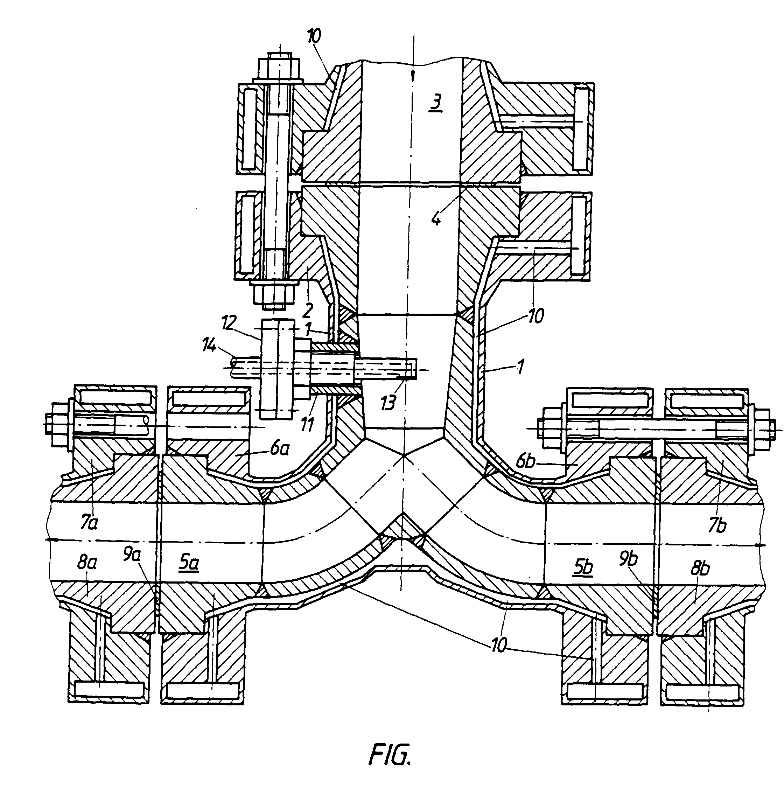

Mit der beigefügten Zeichnung wird die Erfindung noch näher erläutert.

In der Zeichnung ist eine Ausführungsform eines erfindungsgemäßen Rohrleitungselementes zum Aufteilen eines Massestroms dargestellt, in welches eine Berstscheibenhalterung samt Berstscheibe eingebaut ist. Die Transportrichtung der Masse ist mit Pfeilen dargestellt.

Das Rohrleitungselement besteht in der dargestellten Ausführungsform aus einem Kreuzstück 1, in welchem der Massestrom in zwei gleiche Teilströme aufgeteilt wird.

Das Kreuzstück 1 ist auf herkömmliche Weise über einen Flansch 2 an einer Zuführleitung 3 angebracht. Zwischen der Zuführleitung 3 und dem Kreuzstück 1 ist eine Dichtung 4 vorgesehen. In ähnlicher Weise ist das Kreuzstück 1 an seinen Ableitungen 5a und 5b über Flansche 6a und 6b an Gegenflanschen 7a bzw. 7b von Ableitungen 8a und 8b angebracht. Zwischen den Flanschen 6a, 6b bzw. 7a, 7b sind Dichtungen 9a bzw. 9b vorgesehen.

Im Kreuzstück 1 ist ein Mantel 10 für ein Heizmedium vorgesehen, mit welchem die Temperatur der strömenden, viskosen Masse eingestellt bzw. ein Abkühlen verhindert werden kann. Derartige Heizmäntel sind auch in den Gegenflanschen 7a, 7b der Ableitungen 5a bzw. 5b und im Flansch der Zuführleitung 3 vorgesehen. Als Heizmedium kann Wasser, Dampf oder Thermoöl eingesetzt werden.

In die Wand des Kreuzstückes 1 ist eine Muffe 11 eingeschweißt, durch welche eine herkömmliche Berstscheibenhalterung 12 mit einer daran angebrachten Berstscheibe 13 eingeführt ist, wobei sich die Berstscheibe im Zentrum der durch das Kreuzstück 1 strömenden Masse befindet.

Das Erreichen eines unerwünschten Überdruckes im Kreuzstück 1 führt zum Bersten der Scheibe 13, wodurch der im Kreuzstück 1 herrschende Überdruck durch das Ableitrohr 14 abgeführt werden kann.

Es liegt für den Fachmann auf der Hand, daß die Berstscheibe in jeglichem rohrförmigen Körper, der zum Transport der Masse verwendet werden kann, eingebaut sein kann.

## Patentansprüche

1. Verfahren zum Transportieren einer thermisch instabilen, viskosen Masse durch eine Rohrleitung, die eine Sollbruchstelle (13) zum Ablassen von Überdruck aufweist, welche Sollbruchstelle (13) bei Erreichen des Überdruckes bricht, wodurch der Überdruck abgelassen wird, dadurch gekennzeichnet, daß die Sollbruchstelle (13) im Inneren der Rohrleitung vorgesehen ist, mit der Maßgabe, daß die Sollbruchstelle nicht als Teil der Innenwand der Rohrleitung vorgesehen ist.

2. Verfahren zum Transportieren einer thermisch instabilen, viskosen Masse durch eine Rohrleitung nach Anspruch 1, dadurch gekennzeichnet, daß die Sollbruchstelle (13) in der Rohrleitung im wesentlichen mittig angeordnet ist.

3. Verfahren zum Transportieren einer thermisch instabilen, viskosen Masse durch eine Rohrleitung nach einem der Ansprüche 1 oder 2, dadurch gekennzeichnet, daß die Sollbruchstelle (13) so angeordnet ist, daß sie der Transportrichtung der Masse im wesentlichen abgewandt ist.

4. Verfahren zum Transportieren einer thermisch instabilen, viskosen Masse durch eine Rohrleitung nach einem der Ansprüche 1 bis 3, dadurch gekennzeichnet, daß die Sollbruchstelle (13) als Berstscheibe (13) ausgeführt ist.

5. Verfahren nach einem oder mehreren der Ansprüche 1 bis 4, dadurch gekennzeichnet, daß als thermisch instabile, viskose Masse eine Lösung von Cellulose in einem wäßrigen, tertiären Aminoxid eingesetzt wird.

6. Vorrichtung zur Durchführung des Verfahrens nach einem der Ansprüche 1 bis 5, welche eine Rohrleitung und eine Berstscheibe (13) umfaßt, dadurch gekennzeichnet, daß die Berstscheibe im Inneren der Rohrleitung vorgesehen ist, mit der Maßgabe, daß die Berstscheibe (13) nicht als Teil der Innenwand der Rohrleitung vorgesehen ist.

7. Vorrichtung nach Anspruch 6, dadurch gekennzeichnet, daß die Berstscheibe (13) in der Rohrleitung im wesentlichen mittig angeordnet ist.

8. Vorrichtung nach einem der Ansprüche 6 oder 7, dadurch gekennzeichnet, daß die Berstscheibe (13) so angeordnet ist, daß sie der Transportrichtung der Masse im wesentlichen abgewandt ist.

## Claims

1. Method of conveying a thermally unstable viscose mass through a pipeline which has a predetermined breakpoint (13) for relieving overpressure, which predetermined breakpoint (13) ruptures when the overpressure is reached, as a result of which the overpressure is relieved, characterized in that the predetermined breakpoint (13) is provided in the interior of the pipeline, with the proviso that the predetermined breakpoint is not provided as part of the internal wall of the pipeline.

2. Method of conveying a thermally unstable viscose mass through a pipeline according to Claim 1, characterized in that the predetermined breakpoint (13) is disposed essentially centrally in the pipeline.

3. Method of conveying a thermally unstable viscose mass through a pipeline according to either of Claims 1 or 2, characterized in that the predetermined breakpoint (13) is disposed in such a way that it essentially faces away from the direction of conveyance of the mass.

4. Method of conveying a thermally unstable viscose mass through a pipeline according to one of Claims 1 to 3, characterized in that the predetermined breakpoint (13) is designed as a rupture disc (13).

5. Method according to one or more of Claims 1 to 4, characterized in that a solution of cellulose in an aqueous tertiary amine oxide is used as thermally unstable viscose mass.

6. Apparatus for performing the method according to one of Claims 1 to 5, which comprises a pipeline and a rupture disc (13), characterized in that the rupture disc is provided in the interior of the pipeline, with the proviso that the rupture disc (13) is not provided as part of the internal wall of the pipeline.

7. Apparatus according to Claim 6, characterized in that the rupture disc (13) is disposed essentially centrally in the pipeline.

8. Apparatus according to one of Claims 6 or 7, characterized in that the rupture disc (13) is disposed in such a way that that it essentially faces away from the direction of conveyance of the mass.

## Revendications

1. Procédé pour le transport d'une masse visqueuse thermiquement instable dans une conduite tubulaire qui présente un emplacement de rupture facile (13) pour l'évacuation d'une suppression, lequel emplacement de rupture facile (13) se rompt lorsque la suppression est atteinte, de sorte que la suppression est évacuée, caractérisé en ce que l'emplacement de rupture facile (13) est prévu à l'intérieur de la conduite tubulaire, avec pour condition que l'emplacement de rupture facile n'est pas prévu comme faisant partie de la paroi interne de la conduite tubulaire.

2. Procédé pour le transport d'une masse visqueuse thermiquement instable dans une conduite tubulaire selon la revendication 1, caractérisé en ce que l'emplacement de rupture facile (13) est disposé essentiellement au centre de la conduite tubulaire.

3. Procédé pour le transport d'une masse visqueuse thermiquement instable dans une conduite tubulaire selon l'une des revendications 1 ou 2, caractérisé en ce que l'emplacement de rupture facile (13) est essentiellement disposé de manière à ne pas être tourné dans la direction du transport de la masse.

4. Procédé pour le transport d'une masse visqueuse thermiquement instable dans une conduite tubulaire selon l'une des revendications 1 à 3, caractérisé en ce que l'emplacement de rupture facile (13) est réalisé comme sous la forme d'une plaque de rupture (13).

5. Procédé selon l'une ou plusieurs des revendications 1 à 4, caractérisé en ce que l'on utilise comme masse visqueuse thermiquement instable une solution de cellulose dans un oxyde d'amine tertiaire aqueux.

6. Dispositif en vue de la réalisation du procédé selon l'une des revendications 1 à 5, qui comporte une conduite tubulaire et une plaque de rupture (13), caractérisé en ce que la plaque de rupture est prévue à l'intérieur de la conduite tubulaire, avec la condition que la plaque de rupture (13) n'est pas prévue comme faisant partie de la paroi interne de la conduite tubulaire.

7. Dispositif selon la revendication 6, caractérisé en ce que la plaque de rupture (13) est disposée essentiellement au centre de la conduite tubulaire.

8. Dispositif selon l'une des revendications 6 ou 7, caractérisé en ce que la plaque de rupture (13) est essentiellement disposée de manière à ne pas être tournée dans la direction du transport de la masse.
